# EUROPEAN PATENT APPLICATION

(11) **EP 2 279 784 A1**
(43) Date of publication of application: **02.02.2011**
(21) Application number: 09754440.7
(22) Date of filing: 27.05.2009
(51) Int. Cl.: B01D 53/56, B01D 53/74, B01D 53/94, C01C 1/08

(54) **METHOD OF OPERATING HYDROLYTIC SEPARATOR**

(30) Priority: 29.05.2008 JP 2008141321
(71) Applicant: BABCOCK-HITACHI KABUSHIKI KAISHA, Chiyoda-ku Tokyo 1010021 (JP)
(72) Inventor: SHISHIDO, Satoru, Kure-shi Hiroshima 737-8508 (JP); OGASAHARA, Tooru, Kure-shi Hiroshima 737-8508 (JP); TAKEUCHI, Yoshiyuki, Kure-shi Hiroshima 737-8508 (JP); NAGAI, Yoshinori, Kure-shi Hiroshima 737-8508 (JP)
(74) Representative: TBK-Patent
(86) International application number: PCT/JP2009/002340
(87) International publication number: WO 2009/144931

(57) **Abstract**

Provided is a method of operating a hydrolytic separator in which ammonia gas to be used as a reducing agent in a flue gas denitrization apparatus is generated by the hydrolysis of an aqueous urea solution. When the hydrolytic separator is started and ammonia gas injection is initiated, the hydrolytic separator is operated in a constant-pressure mode in which the internal pressure of the hydrolytic separator is kept constant regardless of the increasing temperature of the hydrolytic separator. Thereafter, the constant-pressure operation is switched to a variable pressure operation in which the pressure is raised as the temperature of the hydrolytic separator rises. In the method, the constant-pressure operation is switched to the variable pressure operation after the temperature of the hydrolytic separator in the constant-pressure operation has reached or exceeded the variable pressure operation temperature corresponding to that pressure. As a result, the hydrolytic separator can be operated with satisfactory timing so that the generation amount of ammonia necessary for flue gas denitration can be kept proper.

## Description

### [Technical Field]

The present invention relates in particular to a method of operating a hydrolytic separator that generates ammonia from urea for a flue gas denitration method that uses ammonia to treat nitrogen oxides in exhaust gas.

### [Background Art]

NOx in the exhaust gas from a fixed source, such as a boiler of a thermal power plant, is a causative substance of photochemical smog, and as a removal method thereof (denitration method), a selective catalytic reduction method using ammonia as a reducing agent is widely employed. Recently, cogeneration systems that use a diesel engine, gas turbine, etc., are increasing, mainly in urban areas. For a flue gas denitration apparatus in such a household system, the use of liquefied ammonia, suitable for flue gas denitrization apparatus in large-scale plants, is not appropriate because it requires an apparatus that is too large in scale.

Thus, for a flue gas denitration system in a household system, methods that use a solid-state nitrogen-containing compound that refines ammonia class by decomposition, such as urea, melamine, biuret, cyanuric acid, ammonium carbonate, etc., as an alternative reducing agent to liquefied ammonia are gathering attention. Methods using urea as the reducing agent in the denitration system are also gathering attention in relation to large-scale boiler plants for power generation, for reasons of easiness in handling.

When generating ammonia by hydrolysis of urea, evaporation of water occurs simultaneously in addition to the hydrolysis of urea, and it is thus extremely important in terms of operation of a flue gas denitration system that an aqueous urea solution concentration be maintained constant inside an apparatus (hydrolytic separator) for hydrolyzing the aqueous urea solution.

To maintain a constant concentration of aqueous urea solution, temperature and pressure must be changed according to the amount of ammonia used in the denitration reaction. An invention for this is described in United States Patent No. 6761868 (B2). With a hydrolytic separator (Reactor Vessel) described in the United States Patent Specification, a method of controlling an ammonia generation amount by indirectly or directly heating the aqueous urea solution by steam is generally employed.

There is also known a method where gaseous ammonia is generated by hydrolyzing urea in an aqueous solution state in a sealed reactor and supplied into a combustion gas at an amount that suppresses NOx generation in the combustion gas, and when an ammonia demand drops rapidly, an ammonia generation amount is suppressed by cooling the aqueous urea solution (Japanese Translation of International Application (Kohyo) No. 2004-512161).

### [Prior Art Documents]

[Patent Document 1] United States Patent No. 6761868 (B2)
[Patent Document 2] Japanese Translation of International Application (Kohyo) No. 2004-512161

### [SUMMARY OF THE INVENTION]

### [Problems to be Solved by the Invention]

In using an apparatus in which ammonia to be used as a reducing agent in a flue gas denitrization apparatus is generated by hydrolysis of urea, a required ammonia amount must be supplied with stability. In this process, variable pressure operation control, with which pressure and temperature of a hydrolytic separator are changed as described in the above-mentioned United States Patent (Patent Document 1), is required to maintain a constant aqueous urea solution concentration inside the hydrolytic separator. A relationship of the pressure and the temperature can be determined theoretically and by experimental values, and details thereof are described in Patent Document 1.

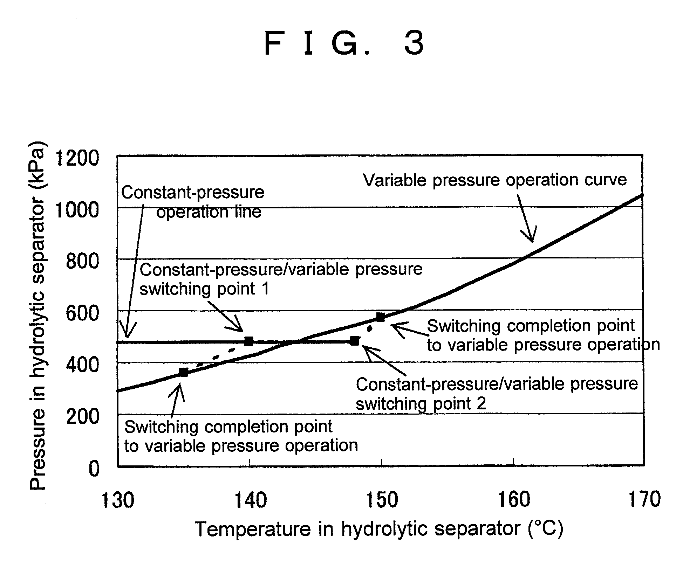

However, in actual operation, the ammonia to be used as the reducing agent in the denitrization apparatus must be injected after the exhaust gas temperature reaches or exceeds an upper limit temperature at which ammonium bisulfate precipitates inside the exhaust gas flue and on a denitration catalyst, and the hydrolytic separator must be put on standby with its internal temperature being no less than an ammonia generating temperature so that an adequate amount of ammonia can be supplied immediately after an ammonia injection initiation temperature is reached. Even during standby of the hydrolytic separator, its pressure continues to rise because hydrolysis of the aqueous urea solution proceeds and by the time the exhaust gas temperature reaches the ammonia injection initiation temperature, the pressure inside the hydrolytic separator is considerably higher than a pressure that is in accordance with a variable pressure operation curve shown in FIG. 3. Thus, in order to switch to a variable pressure operation immediately after the initiation of ammonia injection, the pressure inside the hydrolytic separator must be decreased rapidly to compensate for the pressure difference.

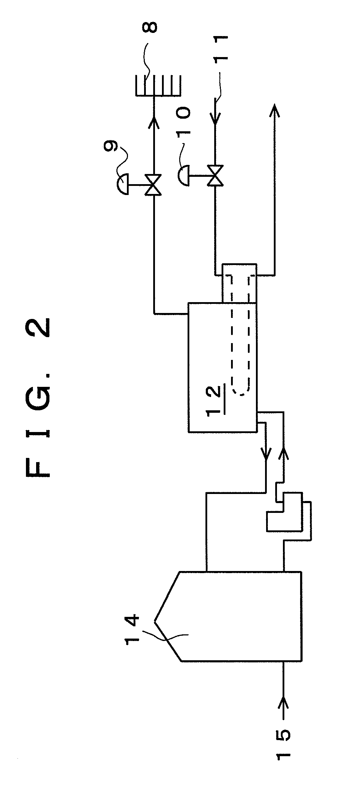

However, although to decrease the pressure inside the hydrolytic separator in an configuration diagram of a hydrolytic separating mechanism that generates ammonia by supplying an aqueous urea solution from an aqueous urea solution storage tank 14 to a hydrolytic separator 12 and heating the aqueous urea solution by steam inside the hydrolytic separator 12 as shown in FIG. 2, a flow rate of heating steam 11 supplied to the hydrolytic separator 12 must be decreased by closing a heating steam flow control valve 10 of the hydrolytic separator 12, the temperature of the hydrolytic separator 12 also decreases at the same time and consequently, the ammonia generation amount inside the hydrolytic separator 12 decreases. Decrease in the ammonia generation amount causes increase in NOx concentration in the exhaust gas at a denitrization apparatus exit.

Thus, with the invention described in Patent Document 1, although the flow rate of the heating steam 11 supplied to the hydrolytic separator 12 must be decreased, the temperature of the hydrolytic separator 12 is also decreased at the same time, and consequently, the ammonia generation amount inside the hydrolytic separator 12 decreases so that exhaust gas denitration may not be performed adequately and the NOx concentration in the exhaust gas at the denitrization apparatus exit may thus increase.

Also with the method described in Patent Document 2, even when the aqueous urea solution is cooled rapidly, it is not easy to appropriately control the amount of ammonia generated from the aqueous urea solution due to there being a time lag.

Thus, an object of the present invention is to propose a method of operating a hydrolytic separator that generates ammonia from urea which, in generating ammonia from aqueous urea solution by use of heating steam, enables an ammonia generation amount necessary for flue gas denitration to be maintained at an appropriate amount in a timely manner.

### [Means for Solving the Problem]

The theme of the present invention can be achieved by the following.

A first aspect of the present invention provides a method of operating a hydrolytic separator during startup at which ammonia gas, to be used as a reducing agent in a flue gas denitrization apparatus, is generated by hydrolysis of an aqueous urea solution, wherein a constant-pressure operation, in which an internal pressure of the hydrolytic separator is kept constant with respect to a temperature rise of the hydrolytic separator, is performed when ammonia gas injection is initiated, an operation of switching to a variable pressure operation, in which the pressure of the hydrolytic separator is raised as the temperature of the hydrolytic separator rises, is performed thereafter, and a switching point from the constant-pressure operation to the variable pressure operation is set at the hydrolytic separator temperature in constant-pressure operation that is no less than a variable pressure operation temperature corresponding to the pressure at that point.

A second aspect of the present invention provides the method of operating the hydrolytic separator according to the first aspect where an upper limit of the switching point from the constant-pressure operation to the variable pressure operation is set to no more than a boiling point of the aqueous urea solution.

According to the present invention, in the operation method in which operation at a constant pressure is performed after initiation of ammonia injection and switching to the variable pressure operation is thereafter performed when the hydrolytic separator temperature reaches or exceeds a temperature for the variable pressure operation corresponding to the pressure at that point, a variable pressure operation curve along which a hydrolytic reaction progresses with stability is an upward sloping curve with which the pressure rises along with the temperature rise, and by thus ensuring that the pressure of the hydrolytic separator rises when switching to the variable pressure operation, the temperature of the hydrolytic separator also rises at the same time. By the temperature rise, an ammonia generation amount increases and consequently, the NOx concentration in the exhaust gas at the denitrization apparatus exit is lowered. That is, by employing the present invention, stable operation can be performed while preventing increase in the NOx concentration in the exhaust gas at the denitrization apparatus exit.

### [Effect(s) of the Invention]

According to the first aspect of the present invention, in the method of operating the hydrolytic separator that uses urea, operation of a combustion apparatus can be performed stably while preventing increase in the NOx concentration in the combustion exhaust gas when switching from the constant-pressure operation to the variable pressure operation that enables operation of the hydrolytic separator to be performed with stability.

Further, according to the second aspect of the present invention, in addition to providing the effect of the first aspect, the temperature of the aqueous urea solution can be raised within a range in which a boiling phenomenon and thermal decomposition of the aqueous urea solution do not occur.

### [BRIEF DESCRIPTION OF THE DRAWINGS]

FIG. 1 is a diagram of a system configuration of a boiler plant in an embodiment of the present invention.
FIG. 2 is a diagram of a configuration of a hydrolytic separator using urea in the embodiment of the present invention.
FIG. 3 is a diagram of the constant-pressure operation and variable pressure operation curves in the embodiment of the present invention.
FIG. 4 is a diagram showing trends of NOx at the denitrization apparatus exit when switching from the constant-pressure operation to the variable pressure operation is performed before reaching a variable pressure operation temperature in the embodiment of the present invention.
FIG. 5 is a diagram showing trends of NOx at the denitrization apparatus exit when switching from the constant-pressure operation to the variable pressure operation is performed after reaching the variable pressure operation temperature in the embodiment of the present invention.

### [Best Mode(s) for Carrying Out the Invention]

An embodiment of the present invention shall now be described along with the drawings.

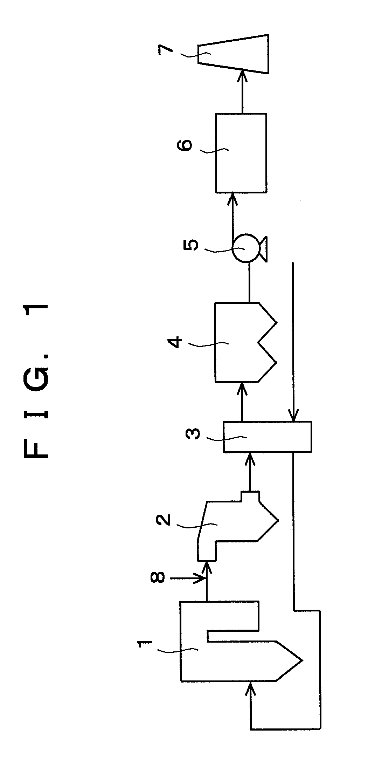

FIG. 1 is a configuration diagram of the exhaust gas purifying system of a boiler plant, and FIG. 2 is a configuration diagram of a hydrolytic separator using urea that injects ammonia gas from an ammonia gas injection nozzle 8 into an exit exhaust gas flue of a boiler 1 of FIG. 1.

In FIG. 1, ammonia gas is injected from the ammonia gas injection nozzle 8 into the exit exhaust gas flue of the boiler 1 to decompose NOx in the exhaust gas into water vapor and nitrogen gas at a denitrization apparatus 2 at a downstream side of the flue. Thereafter, the exhaust gas undergoes heat exchange with combustion air at an air preheater 3 and is removed of dust by an electrostatic precipitator 4. The exhaust gas that is removed of dust is then raised in pressure by an induction fan 5, sulfur oxide (SO₂) in the exhaust gas is thereafter removed by a desulfurizer 6, and the exhaust gas is discharged into air from a stack 7.

FIG. 2 shows the configuration of the system by which the ammonia gas to be injected into the boiler exit flue is generated from urea. An aqueous urea solution 15 stored in the aqueous urea solution storage tank 14 is fed into the hydrolytic separator 12 by a pump 13. In an interior of the hydrolytic separator 12, the aqueous urea solution is heated by a hydrolytic separator heating steam 11 supplied from the boiler 1 side, and a temperature inside the hydrolytic separator 12 is controlled by the hydrolytic separator heating steam flow control valve 10. Ammonia gas, which is generated at the hydrolytic separator 12 and contains carbon dioxide gas (CO₂) and water vapor, is subject to flow rate control by an ammonia gas flow control valve 9 to a flow rate controlled according to NOx control logic in an exit exhaust gas of the denitrization apparatus 2 shown in FIG. 1 and is injected into the exit flue of the boiler 1 from the ammonia gas injection nozzle 8.

The pressure and temperature of the hydrolytic separator 12 are controlled by a flow rate of the hydrolytic separator heating steam. The constant-pressure operation and variable pressure operation curves are shown in FIG. 3 together with switching points and switching completion points thereof. In the present embodiment, in switching from the constant-pressure operation to the variable pressure operation during plant startup, switching was performed respectively before (constant-pressure/variable pressure switching point 1 of FIG. 3) and after (constant-pressure/variable pressure switching point 2 of FIG. 3) a variable pressure operation temperature was reached to compare how the switching influences the exit exhaust gas NOx concentration of the denitrization apparatus 2.

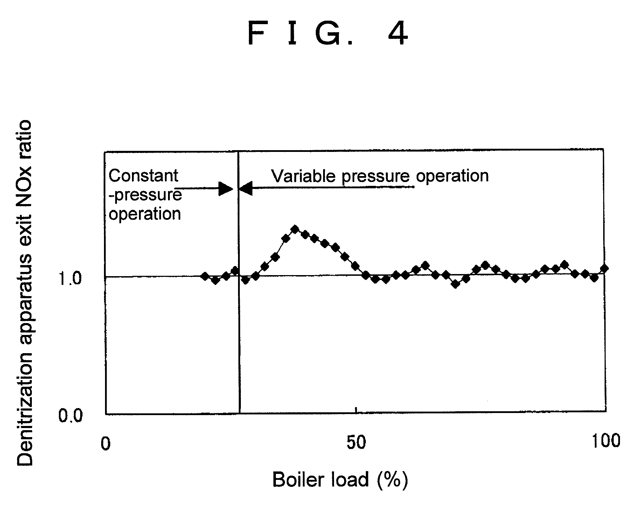

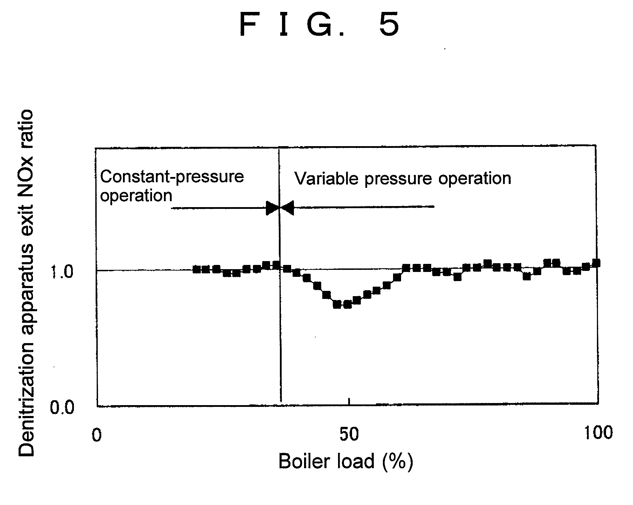

Variations of the (exit exhaust gas NOx concentration during the variable pressure operation) / (ratio of exit exhaust gas NOx concentration during the constant-pressure operation) of the NOx concentration in the exit exhaust gas of the denitrization apparatus 2 with respect to boiler load are shown for the two conditions in FIG. 4 and FIG. 5, respectively.

In the case where switching from the constant-pressure operation to the variable pressure operation is performed at the constant-pressure/variable pressure switching point 1, the pressure during the constant-pressure operation of the hydrolytic separator 12 is higher than the pressure during the variable pressure operation, and thus a control in a direction of lowering the pressure acts as shown in FIG. 3 so that the heating steam amount of the hydrolytic separator 12 decreases and the temperature decreases along with the decrease in pressure. The ammonia generation amount decreases in accordance with the decrease in temperature and thus the ammonia concentration in the gas generated from the hydrolytic separator 12 decreases and this consequently causes a rise of NOx concentration in the exit exhaust gas of the denitrization apparatus 2.

On the other hand, in the case where switching from the constant-pressure operation to the variable pressure operation is performed at the constant-pressure/variable pressure switching point 2, a control is performed oppositely so as to raise the pressure so that the amount of heating steam supplied to the hydrolytic separator 12 increases and the temperature rises. Consequently, the ammonia generation amount increases and this acts to lower the NOx concentration in the exit exhaust gas of the denitrization apparatus 2 so that the plant can be operated with stability while suppressing increase in the exit NOx.

### [Industrial Applicability]

When in an apparatus for generating ammonia from an aqueous urea solution, control does not act in a satisfactory manner, control of exhaust gas NOx concentration at the denitrization apparatus exit for purifying the exhaust gas from a boiler, etc. , is disabled and a problem of increased NOx emission amount occurs. Also, temperature rise of the aqueous urea solution causes a boiling phenomenon and thermal decomposition of the aqueous urea solution to occur and thus causes problem in terms of equipment operation. The present invention is effective for minimizing the NOx emission amount from the exhaust gas while enabling stable operation of the urea equipment.

### [Description of the Reference Numerals]

- 1: Boiler
- 2: Denitrization apparatus
- 3: Air preheater
- 4: Electrostatic precipitator
- 5: Induction fan
- 6: Desulfurizer
- 7: Stack
- 8: Ammonia gas injection nozzle
- 9: Ammonia gas flow control valve
- 10: Hydrolytic separator heating steam flow control valve
- 11: Hydrolytic separator heating steam
- 12: Hydrolytic separator
- 13: Aqueous urea solution transport pump
- 14: Aqueous urea solution storage tank
- 15: Aqueous urea solution

## Claims

1. A method of operating a hydrolytic separator during startup of the hydrolytic separator at which ammonia gas, to be used as a reducing agent in a flue gas denitrization apparatus, is generated by hydrolysis of an aqueous urea solution, wherein
a constant-pressure operation, in which an internal pressure of the hydrolytic separator is kept constant with respect to a temperature rise of the hydrolytic separator, is performed when ammonia gas injection is initiated, an operation of switching to a variable pressure operation, in which the pressure of the hydrolytic separator is raised as the temperature of the hydrolytic separator rises, is performed thereafter, and a switching point from the constant-pressure operation to the variable pressure operation is set at the hydrolytic separator temperature in constant-pressure operation that is no less than the variable pressure operation temperature corresponding to the pressure at that point.

2. The method of operating the hydrolytic separator according to Claim 1, wherein an upper limit of the switching point from the constant-pressure operation to the variable pressure operation is set to no more than a boiling point of the aqueous urea solution.
